# FASCICULE DE BREVET EUROPEEN

(11) **EP 3 609 814 B1**
(45) Date de publication et mention de la délivrance du brevet: **30.12.2020**
(21) Numéro de dépôt: 18720979.6
(22) Date de dépôt: 09.04.2018
(51) Int. Cl.: B65G 1/02, B65G 1/04, B65G 1/06

(54) **SYSTÈME DE PRÉPARATION DE COMMANDES**
KOMMISSIONIERUNGSSYSTEM
ORDER-PICKING SYSTEM

(30) Priorité: 12.04.2017 FR 1753183
(43) Date de publication de la demande: 19.02.2020
(73) Titulaire: Exotec Solutions, 59777 Lille (FR)
(72) Inventeur: MOULIN, Romain, 59000 Lille (FR); HEITZ, Renaud, 59650 Villeneuve D'Ascq (FR)
(74) Mandataire: Ermeneux, Bertrand
(86) Numéro de dépôt international: PCT/EP2018/059024
(87) Numéro de publication internationale: WO 2018/189110

(56) Documents cités:
- EP-A2- 1 348 646
- WO-A1-2016/199033
- WO-A2-2010/100513
- US-A1- 2016 375 814

## Description

### 1. Domaine de l'invention

Le domaine de l'invention est celui de la logistique en entrepôt et en particulier de la manutention et du transport de pièces ou de produits.

Plus précisément, l'invention concerne un système de préparation de commandes.

L'invention trouve une application dans l'automatisation de la gestion des flux d'un entrepôt de stockage, par exemple dans un entrepôt de préparation de commandes d'une chaîne logistique.

### 2. État de la technique

Dans la chaîne logistique globale, la gestion des flux et la manipulation des produits au sein d'un entrepôt jouent un rôle déterminant.

Traditionnellement, un préparateur de commandes se déplace dans l'entrepôt pour collecter chaque produit d'une commande à son emplacement sur une étagère d'un rayonnage.

On constate qu'une telle organisation implique que le préparateur parcoure de longs trajets au cours d'une journée de travail, ce qui occasionne fatigue et perte de temps lorsque le trajet n'est pas optimisé.

Un autre inconvénient est que le préparateur doit parfaitement connaître l'agencement de l'entrepôt pour ne pas perdre de temps.

Pour limiter la fatigue due aux déplacements, améliorer la gestion de la cueillette (ou « picking » en anglais), réduire le temps de préparation des commandes et son coût, on a imaginé une organisation des entrepôts où les produits sont acheminés par des machines jusqu'à des postes de préparation de commandes.

Ainsi, on a proposé de mettre en œuvre des convoyeurs pour transporter les produits des rayonnages jusqu'aux postes de préparation, au sein d'un entrepôt.

Un inconvénient de cette technique connue est qu'elle nécessite une infrastructure lourde et onéreuse.

Un autre inconvénient de cette technique est qu'il est complexe et coûteux de la faire évoluer.

Encore un inconvénient, est que les convoyeurs sont encombrants, ce qui entraîne une perte de surface utile de stockage importante.

On connaît également une technique consistant à déplacer horizontalement, le long d'un rayonnage, un mat supportant un ascenseur qui permet d'atteindre chaque niveau du rayonnage, afin de prélever ou de déposer un bac.

Un inconvénient de cette technique est qu'il faut envisager d'installer un mat par rayonnage dans l'entrepôt.

Un autre inconvénient de cette technique connue est qu'il faut prévoir un ou plusieurs convoyeurs à l'extrémité de chaque rangée de rayonnages pour transporter les bacs prélevés par les mats vers la zone de préparation de commandes.

Sur un principe similaire, on connaît une technique consistant à utiliser des navettes autoguidées se déplaçant sur des voies de circulation, formées de rails, agencées sur plusieurs niveaux, chacune à hauteur d'une étagère d'un rayonnage. Pour changer de niveau, les navettes empruntent un ascenseur dédié, disposé à l'extrémité du rayonnage. Lorsqu'une navette a prélevé un bac sur une étagère, elle descend le déposer sur un convoyeur situé au pied du rayonnage.

Un inconvénient de cette technique connue est que les navettes ne peuvent pas se déplacer d'un rayonnage à l'autre, ce qui impose de prévoir un nombre important de navettes.

Un autre inconvénient de cette technique est qu'il faut prévoir des voies de circulation et des convoyeurs, ce qui est coûteux.

Encore un inconvénient de cette technique est que les navettes doivent attendre que l'ascenseur se libère pour pouvoir accéder au convoyeur, ce qui ralentit la préparation des commandes.

Dans une variante, et pour réduire le nombre de voies de circulation, on a imaginé déplacer un ascenseur sur une voie de circulation, pour permettre aux navettes d'atteindre quelques étagères au-dessus du niveau de la voie de circulation.

Un inconvénient de cette variante est qu'elle est encore plus coûteuse et complexe à mettre en œuvre.

On a également proposé de transporter des rayonnages disposés dans l'entrepôt jusqu'à une zone de préparation de commandes à l'aide de robots. Pour cela, un robot vient se placer sous le rayonnage et le soulève pour pouvoir le transporter.

Un inconvénient de cette technique connue est qu'elle implique de limiter le volume de stockage en hauteur, pour permettre aux préparateurs de prélever des produits à hauteur d'homme d'une part et pour éviter le basculement des rayonnages lors du transport d'autre part.

Pour augmenter le volume de marchandises stockées dans un entrepôt, on a par ailleurs pensé à stocker les produits directement dans des bacs empilés en hauteur et regroupés sur une zone de stockage.

Des robots circulant au sommet du volume de stockage sont utilisés pour extraire les bacs contenants les objets ou marchandises d'une commande. Lorsqu'un robot doit prélever un bac qui n'est pas entreposé sur le niveau supérieur, le robot dépile successivement, l'un après l'autre les bacs situés au-dessus de ce bac. Lors de cette opération, le robot replace au fur et à mesure chaque bac dépilé dans un logement vide sur la surface du volume de stockage.

Un inconvénient de cette technique est que les robots manipulent à chaque fois une grande quantité de bacs pour extraire un seul bac, ce qui ralentit la préparation de la commande.

On connaît également, par exemple du document US-B1-7,101,139 ou du document US-A1-2012/0039693, un robot équipé de deux roues dentées rétractables de chaque côté de son châssis. Ces roues dentées sont destinées à s'engrener sur des crémaillères verticales fixées à des rayonnages, pour permettre au robot de s'élever entre deux rayonnages et de parvenir, dans un entrepôt de marchandises, au niveau d'un bac contenant des objets à prélever, ou, dans un garage à voitures sur rayonnage, jusqu'au niveau d'un véhicule automobile à redescendre.
On connait également du document EP 1 348 646 A2 un chariot à guidage automatique circulant sous des rayonnages et pouvant s'élever entre deux rayonnages pour prendre un bac posé sur un des rayonnages. Ce chariot est équipé de chaque côté de deux roues dentées, d'axes parallèles à ceux des roues de roulage du chariot, qui lui permettent de grimper le long des rayonnages en s'engrenant avec des crémaillères fixées aux rayonnages, et d'une roue de guidage, qui permet d'assurer la stabilité du chariot lors de la montée Le document EP 1 348 646 A2 divulgue un système de préparation de commande selon le préambule de la revendication 1.

Un inconvénient de ces techniques connues de robot équipé de quatre roues dentées rétractables coopérant avec des crémaillères est son coût élevé, du fait de la nécessité d'équiper chaque rayonnage de crémaillères.

Un autre inconvénient de ces techniques est que le robot peut rester bloqué lors de la montée ou de la descente, si la progression en hauteur d'une des quatre roues dentées sur les crémaillères n'est pas parfaitement identique, à chaque instant, à celle des autres roues dentées.

Encore un inconvénient de ces techniques est que l'engrènement des roues dentées sur les crémaillères est une source de bruit importante.

### 1. Objectifs de l'invention

L'invention a donc notamment pour objectif de pallier les inconvénients de l'état de la technique cités ci-dessus.

Plus précisément, l'invention a pour objectif de fournir une technique de préparation de commandes qui limite l'intervention humaine et qui soit simple à mettre en œuvre.

Un autre objectif de l'invention est de fournir une technique de préparation de commandes qui soit peu coûteuse.

Encore un objectif de l'invention est de fournir une technique de préparation de commandes qui soit peu bruyante.

Un objectif de l'invention est de fournir une technique de préparation de commandes qui puisse s'adapter aisément à des évolutions de la zone de stockage.

Un autre objectif de l'invention est de proposer une technique de préparation de commande qui soit compatible avec une zone de stockage dense.

Un objectif de l'invention est de proposer une telle technique qui permette d'utiliser des rayonnages de hauteurs et/ou d'orientations différentes dans un même entrepôt.

Un autre objectif de l'invention est également de fournir une technique de préparation de commandes permettant d'utiliser des rayonnages existants.

Encore un objectif de l'invention est de fournir une technique de préparation de commandes qui soit sans danger pour des opérateurs.

### 4. Exposé de l'invention

Ces objectifs, ainsi que d'autres qui apparaîtront par la suite sont atteints à l'aide d'un système de préparation de commandes comprenant deux paires de montants solidarisés à deux rayonnages distincts délimitant une allée de circulation et un chariot à guidage automatique présentant au moins deux roues de roulage, destiné à prélever des objets d'une commande dans au moins un des rayonnages et des moyens de grimpe motorisés aptes à coopérer avec les montants de sorte à permettre audit chariot de s'élever le long des montants, les moyens de grimpe comprenant quatre roues dentées d'axes sensiblement parallèles, destinées chacune à coopérer avec un des quatre montants, les axes des roues dentées étant sensiblement orthogonaux aux axes des roues de roulage,
chacune des roues dentées étant montée sur un support mobile par rapport au châssis du chariot entre deux positions :
- une position écartée dans laquelle au moins une partie de la roue dentée montée sur le support fait saillie latéralement hors de l'alignement du châssis ;
- une position rétractée, dans laquelle la roue dentée montée sur le support est en vis-à-vis du châssis ;

Selon l'invention, une chaîne à rouleaux est fixée sur chacun desdits montants, sensiblement tendue, ladite chaîne s'étendant sensiblement parallèlement à l'axe longitudinal du montant sur lequel elle est fixée et étant destinée à recevoir au moins une dent de la roue dentée coopérant avec le montant sur lequel elle est fixée, deux rouleaux adjacents de ladite chaîne étant sensiblement espacés de la valeur du pas de ladite roue dentée, et chaque support mobile présente des moyens de solidarisation avec un desdits quatre montants configurés de sorte à permettre de maintenir un écartement prédéterminé entre l'axe de la roue dentée montée sur ledit support mobile et la chaîne recevant les dents de cette roue dentée.

L'invention concerne donc un système qui permet de limiter l'intervention humaine à la seule mise en carton des marchandises commandées, grâce à au moins un chariot à guidage automatique qui prélève les objets commandés dans les rayonnages et qui transporte ces objets jusqu'à une zone de préparation de commandes où un opérateur met ces objets en carton.

Ce chariot est avantageusement configuré de sorte à pouvoir grimper, c'est-à-dire à monter en s'agrippant, sur deux paires de montants simplement fixés ou intégrés à deux rayonnages distincts de part et d'autre d'une allée, pour s'élever à cheval sur ces deux rayonnages parallèles.

Par ailleurs, les moyens de grimpe permettent au chariot de rester constamment en prise avec le ou les montants lors de sa montée ou de sa descente et de maintenir le chariot sensiblement horizontal, ce qui permet de prévenir une chute du bac ou de l'objet porté par le chariot.

Les deux supports mobiles permettent en outre au chariot de se glisser entre deux montants de part et d'autre d'une allée, lorsque les supports mobiles sont rétractés, puis en écartant les supports mobiles, de grimper le long des paires de montants.

En outre, les chaînes à rouleaux permettent de disposer d'une « échelle d'escalade » des rayonnages à moindre coût. Cette « échelle » est particulièrement facile à entretenir, car il suffit, en cas d'usure localisée d'un maillon, de changer le maillon concerné. En outre, il est plus simple et moins coûteux de changer une chaîne plutôt qu'un montant complet lorsque l'usure est répartie.

On notera que dans le cadre de l'invention, on entend par roue dentée, une roue dentée formant un ensemble monobloc ou encore un ensemble formé de deux poulies sur laquelle est montée une courroie crantée.

On notera également que dans le cadre de l'invention, on entend par écartement entre la chaîne et l'axe de la roue dentée, la distance entre l'axe longitudinal de la chaîne et l'axe de rotation de la roue dentée mesurée selon une direction normale à l'axe longitudinal de la chaîne.

Selon un mode de réalisation préférentiel de l'invention, chacune desdites chaînes est fixée sensiblement aux deux extrémités d'un desdits montants.

Selon un mode de réalisation avantageux de l'invention, un système tel que décrit ci-dessus comprend des moyens de réglage de la position d'au moins un des moyens de fixation d'au moins une desdites chaîne sensiblement à une extrémité d'un desdits montants, selon l'axe longitudinal dudit montant, destinés à permettre de tendre ladite chaîne.

Ainsi, il est possible de remettre en tension la chaîne lorsque celle-ci s'est détendue, lors des opérations de maintenance.

Selon un mode de réalisation particulièrement avantageux de l'invention, lesdits moyens de réglage de la position d'au moins un des moyens de fixation comprennent un ressort.

Ainsi, la tension de la chaîne peut être maintenue constante grâce au ressort lorsque la chaîne s'allonge, sans qu'un opérateur n'ait à intervenir pour régler la tension de la chaîne.

Selon un mode de réalisation particulier de l'invention, lesdits moyens de solidarisation de chaque support mobile avec un desdits quatre montants comprennent au moins une roue d'appui et une contre-roue d'axes parallèles à l'axe de la roue dentée montée sur le support mobile, aptes à rouler sur un desdits montants.

Ainsi, en prenant une paroi du montant en étau entre la roue d'appui et la contre-roue on maintient un écartement constant entre la roue dentée et la chaîne tendue. La position latérale du chariot entre les deux rayonnages est donc ainsi maintenue constante, ce qui empêche les dents des roues dentées ou les crans des courroies de frotter à travers la chaîne sur le montant et limite l'apparition d'une usure prématurée.

Selon un aspect avantageux de l'invention, lesdits supports mobiles sont montés sensiblement aux quatre extrémités du châssis dudit chariot.

La masse du chariot, qu'il soit ou non chargé, se répartit ainsi aux quatre coins du châssis, ce qui limite le porte à faux et réduit les efforts exercés sur les moyens de solidarisation des supports aux montants.

Selon un mode de réalisation avantageux de l'invention, ledit montant comprend une gorge longitudinale apte à recevoir ladite chaîne.

Ainsi la chaîne peut être maintenue latéralement dans la gorge et ne dévie pas sous la pression exercée par le chariot.

Selon un aspect particulier de l'invention, ledit montant comprend au moins une aile s'étendant sensiblement perpendiculairement à l'axe longitudinal dudit montant, ladite roue d'appui venant en appui sur une face de ladite aile et ladite contre-roue venant en appui sur une face opposée de ladite aile.

Selon un aspect particulier de l'invention, le montant est un rail profilé en oméga.

Selon un mode de réalisation particulier de l'invention, un système de préparation de commandes tel que décrit ci-dessus comprend des moyens de fixation du montant audit rayonnage.

Dans un mode de réalisation particulier de l'invention, les montants sont fixés au sol à proximité d'un ou de plusieurs rayonnages.

Préférentiellement, le chariot présente des moyens de préhension d'un bac de stockage d'objets.

Le chariot peut prélever ou déposer de manière autonome un bac sur l'étagère d'un rayonnage à son emplacement de stockage, sans intervention extérieure, notamment sans intervention humaine.

De tels moyens de préhension peuvent comprendre, par exemple, une pelle télescopique, des bras latéraux télescopiques et/ou une fourche télescopique équipée d'un doigt pour pousser ou tirer un bac.

Selon un mode de réalisation avantageux de l'invention, un système de préparation de commande tel qu'un de ceux décrits ci-dessus comprend des moyens de freinage des moyens de grimpe.

Ainsi on sécurise la descente du chariot, lorsque celui-ci est défaillant, et en particulier lorsque la batterie électrique alimentant les moteurs des moyens de grimpe est déchargée.

Le freinage peut dans un mode de réalisation particulier de l'invention être de type « visqueux » et obtenu par un freinage magnétique, en shuntant l'induit du moteur.

Selon un mode de réalisation préférentiel de l'invention, les moyens de freinage comprennent un galet tendeur appuyant sur une courroie d'entraînement d'une poulie menée solidaire d'au moins une roue dentée, le galet tendeur chutant en cas de rupture de la courroie d'entraînement dans une position de sorte à bloquer par friction la poulie menée.

Selon un mode de réalisation préférentiel de l'invention, la distance entre les montants d'un même rayonnage est sensiblement identique à l'écartement entre deux roues dentées des supports monté d'un même côté latéral du chariot.

Selon un mode de réalisation particulier de l'invention, les montants sont des montants du rayonnage.

Ainsi, l'installation est simplifiée et le coût réduit.

Selon un mode de réalisation particulier de l'invention, au moins une des roues de roulage et les moyens de grimpe motorisés sont entraînés par le même moteur.

On obtient ainsi un système léger et particulièrement simple à mettre en œuvre.

Avantageusement, un système tel que décrit ci-dessus comprend deux moteurs indépendants destinés chacun à entraîner une des paires de roues dentées.

Ainsi, les deux paires de roues dentées peuvent tourner à des vitesses différentes pour maintenir le chariot horizontal, s'il existe des écarts dimensionnels entre les maillons des chaînes installées de chaque côté de l'allée de circulation.

### 5. Liste des figures

D'autres caractéristiques et avantages de l'invention apparaîtront plus clairement à la lecture de la description suivante d'un mode de réalisation de l'invention, donné à titre de simple exemple illustratif et non limitatif, et des dessins annexés parmi lesquels :
- la figure 1 est une vue schématique, en perspective d'un entrepôt équipé d'un exemple de mode de réalisation d'un système de préparation de commandes selon l'invention ;
- la figure 2 est une représentation schématique en perspective d'un chariot à guidage automatique utilisé dans l'entrepôt illustré en référence à la figure 1 ;
- la figure 3 est une vue de dessus dans laquelle le chariot présenté en référence à la figure 2 grimpe en appui sur deux rayonnages parallèles ;
- la figure 4 est une vue de détail de la base d'un montant des rayonnages illustrés en référence à la figure 1 ;
- la figure 5 est une vue de détail, en coupe d'un module de grimpe du chariot présenté en référence à la figure 2 ;
- la figure 6 est une vue de dessus d'un module de grimpe du chariot qui coopère avec un montant des rayonnages illustrés en référence à la figure 1 ;
- la figure 7 est une vue de détail du système d'entraînement des modules de grimpe du chariot présenté en référence à la figure 2 ;
- la figure 8 est une vue de détail du dispositif de compensation de l'écart entre les deux rails profilés équipant un module de grimpe du chariot présenté en référence à la figure 2.

### 6. Description détaillée de l'invention

### 6.1. Premier exemple de mode de réalisation de l'invention

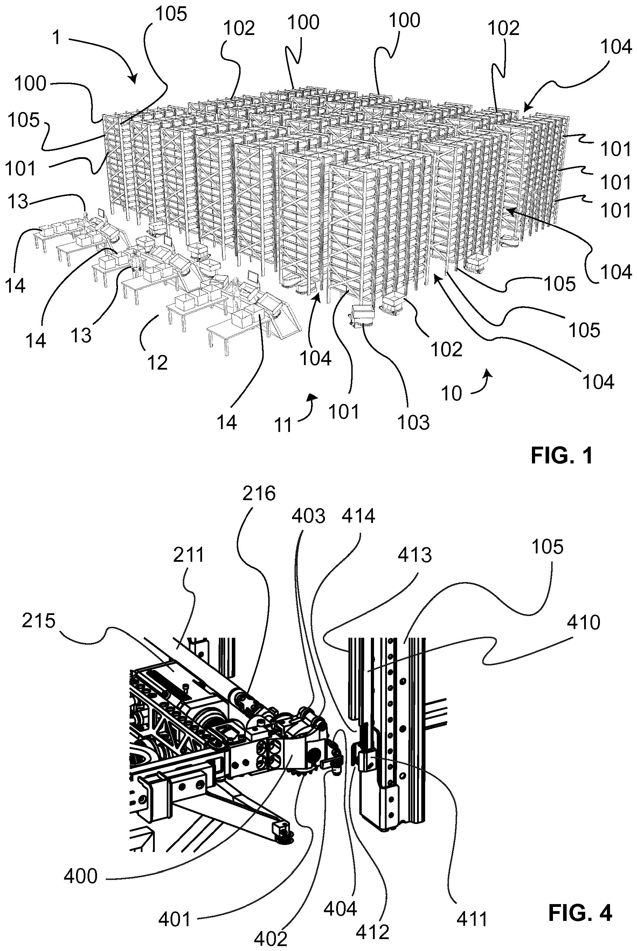

Sur la **figure 1**, on a illustré un entrepôt 1 destiné au stockage de produits en vue de leur expédition. Cet entrepôt est réparti entre une aire de stockage 10 et une zone de préparation 11 de commandes.

Dans la zone de préparation 11 sont disposés des postes de préparation de commandes 12 sur lesquels des opérateurs 13 préparent des colis 14 avec les produits d'une commande.

L'aire de stockage 10 est organisée en rayonnages 100 avec des étagères sur plusieurs niveaux 101 supportées par des montants 105, étagères sur lesquelles sont entreposés des bacs 102 qui contiennent les produits ou articles stockés.

Une flotte de chariots à guidage automatique 103 (« Automatic Guided Vehicle » en anglais) assure le transport des bacs 102 entre l'aire de stockage 10 et les postes de préparation de commandes 12.

Chaque robot 103 reçoit les informations de localisation du bac 102 contenant l'article à aller chercher, pour compléter une commande traitée par l'un des opérateurs 13. Le robot 103 se rend à l'emplacement où est rangé le bac 102 et l'extrait du niveau 101 du rayonnage 100 spécifié par les informations de localisation reçues. Ensuite, le robot 103 transporte depuis le rayonnage 100 par via des allées 104 le bac 102 jusqu'au poste de préparation de commandes 12. L'opérateur 13 n'a plus qu'à prélever la quantité d'articles commandés et les emballer. Le robot 103 rapporte ensuite le bac 102 à son emplacement dans l'aire de stockage 10.

Les rayonnages 100 sont identiques et disposés en parallèle. L'espace entre deux rayonnages 100 forme une travée 104 qui sert d'allée de circulation au sol pour des robots 103.

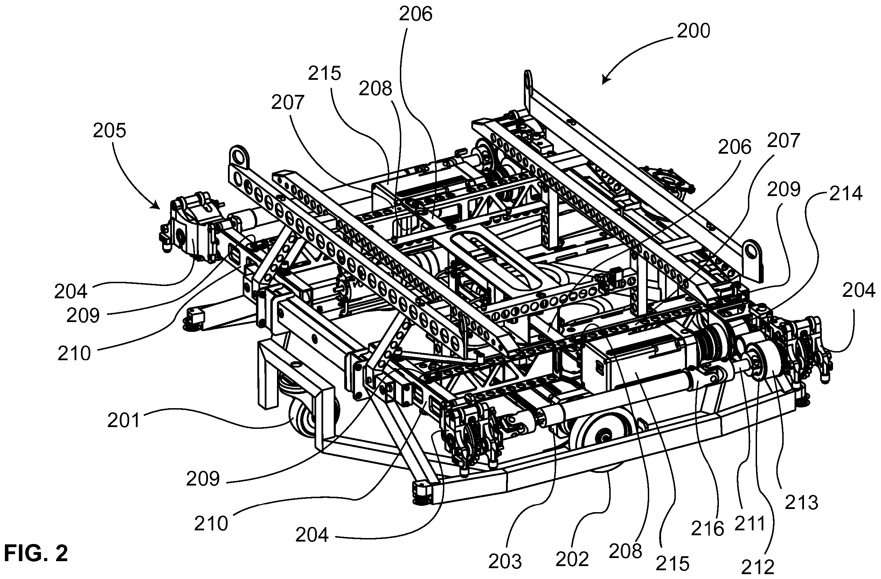

On a illustré sur la **figure 2****,** un robot 103 formé d'un châssis 200 qui est porté par deux roues folles 201 et tracté par deux roues motrices 202 actionnées par des moteurs 203 indépendants l'un de l'autre. Ainsi, sur un sol sensiblement plan et horizontal, le chariot autoguidé 103 peut suivre des trajectoires rectilignes, courbes et tourne sur lui-même en fonction de la commande de la rotation des moteurs 203.

Pour escalader des rayonnages 100, le châssis du robot 103 est équipé, sensiblement aux quatre extrémités du châssis, d'un module de grimpe 204 rétractable. La sortie et la rentré de ces modules de grimpe 204 est actionné par un moteur (non représenté) qui translate deux fourches télescopiques 205 latérales porteuses des modules de grimpe 204 entre une position écartée et une position rétractée.

Ainsi, le robot 103 peut monter sur des montants de deux rayonnages parallèles 100 qui se font face, en répartissant son poids sur les quatre montants 105.

Chaque fourche télescopique 205 latérale est formée d'une tringle de commande 206, d'une tringle de renvoi 207 et de deux bras coulissants 210 chacun porteur d'un module de grimpe 204.

Pour chaque fourche télescopique 205, la tringle de renvoi 207 est maintenue en son centre par une liaison pivot à l'aide d'un premier axe 208 dit central avec l'extrémité distale de la tringle de commande 206 sensiblement perpendiculaire. En outre, la tringle de renvoi 207 à chaque extrémité distale est liée de manière pivotante par un deuxième axe 209 à un bras coulissant 210.

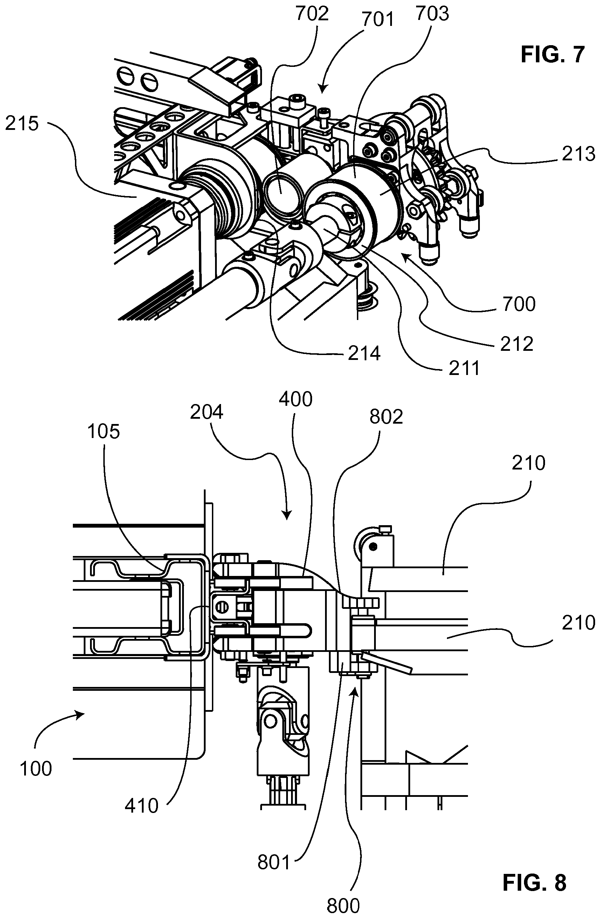

Grâce à ces liaisons pivots, le robot tolère une variation de l'écartement entre les montants 105 des rayonnages 100 à escalader. Ces liaisons pivots permettent également de corriger un écart de parallélisme entre l'axe longitudinal du robot 103 et chaque paire de montants 105. En effet, l'entrée en contact successive des modules de grimpe d'une même fourche, suivi d'une poussée simultanée permet de rectifier l'écart de position. Ce mécanisme est complété par un dispositif de compensation d'écartement entre les montants 105 (non représenté sur la figure 2) qui sera décrit plus en détail ci-après sur la figure 8.

Chaque fourche télescopique 205 est équipée par ailleurs d'un système d'entraînement de deux modules de grimpe 204 situé d'un même côté du châssis. Ce système d'entraînement est formé d'un arbre de transmission 211 sur lequel est fixé une poulie menée 212, et est relié à chaque extrémité à une roue dentée d'un module de grimpe 204 (visible sur la vue de détail de la figure 4).

La poulie menée 212 est entraînée par une courroie crantée 213 qui transmet le mouvement d'une poulie menante 214 actionnée par un moteur de grimpe 215. En outre, l'arbre de transmission 211 est équipé d'un cardan 216 à deux joints qui autorise un écart de position latéral entre les deux modules de grimpe 204 de la fourche télescopique 205, ce qui permet de réaliser une transmission homocinétique.

Chaque moteur d'escalade 215 est commandé indépendamment par un module de contrôle de la position des arbres des moteurs (non représenté sur la figure 2), afin de garantir que le robot 103 reste horizontal et que la charge ne chute pas. Ainsi, le module de contrôle adapte la vitesse de chaque moteur 215 pour compenser l'écart entre les rouleaux des chaînes fixées sur chaque montant 105, dont la longueur peut varier lors de leur fabrication, compte-tenu des tolérances de fabrication.

Il convient en effet de noter que, sur des montants 105 de 10 à 12 m de longueur, équipés de chaînes de même type, l'écart de position entre les rouleaux d'extrémités de deux chaînes peut atteindre 20 mm.

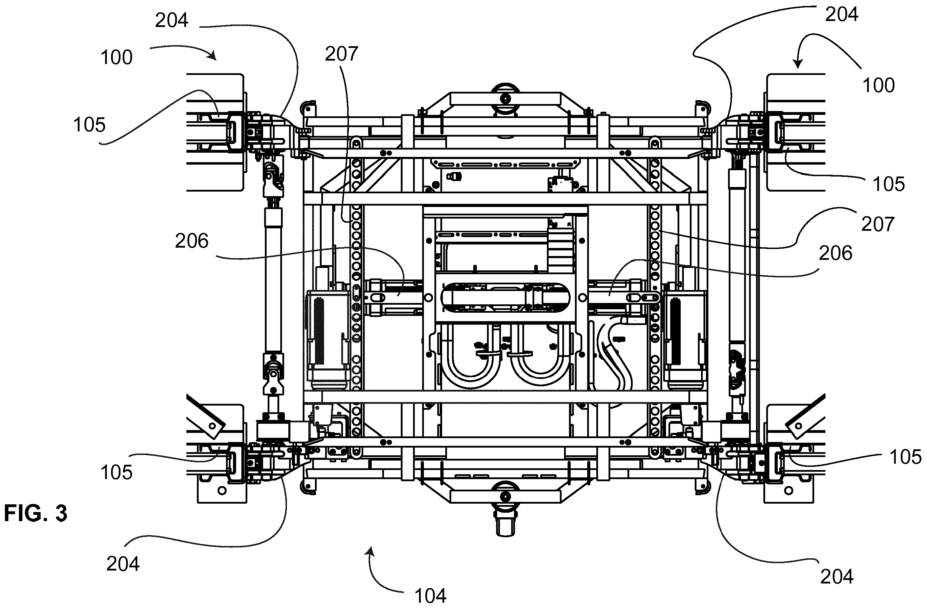

On a représenté sur la **figure 3****,** un robot 103 en vue de dessus grimpant deux rayonnages 100 à l'aide des quatre modules de grimpe 204 qui coopèrent avec deux paires de montants 105 des deux rayonnages 100 sensiblement parallèles délimitant l'allée 104.

Le robot 103 est équipé d'un système de translation des fourches télescopiques 205 entre une position écartée et une position rétractée. Ce système de translation comprend deux poulies et une courroie crénelée (non représentées sur la figure 3) solidarisée au châssis dans le plan transversal médian du robot 103. En outre, sur chaque brin opposé de cette courroie crénelée est fixée l'extrémité proximale de l'une des deux tringles de commande 206. Pour sortir ou rentrer le module de grimpe 204, la poulie menante, actionnée par un moteur de commande des fourches 205 (non représenté sur la figure 3), entraîne la courroie crénelée qui commande la translation du module de grimpe 204.

C'est donc le sens de rotation du moteur pas à pas commandé par un module de contrôle de la position de l'arbre du moteur de commande des fourches 205 (non représenté sur la figures 3) qui permet de translater les modules de grimpe 204 entre la position rétractée pour les déplacements au sol et la position écartée pour grimper sur les rayonnages.

Ainsi, les modules de grimpe 204 sortent ou rentrent simultanément sur les deux flancs ou côtés latéraux du robot 103. Par ailleurs, si les modules de grimpe 204 d'une fourche télescopique 205 entre en contact avec les montants 105 d'un côté de l'allée 104 avant l'autre, en raison d'un écart de centrage du robot 103 dans l'allée 104, la pression exercée par la fourche télescopique 205 recentre le robot 103 entre les montants 105 de part et d'autre de l'allée 104.

On a illustré plus en détail sur les **figures 4 à 6** le module de grimpe 204 et le montant 105 sur lequel est fixé un rail profilé en Oméga (« Ω ») 410. Comme on peut le voir sur la figure 4 chaque module de grimpe 204 comprend une embase 400 qui supporte une roue dentée 401, une roue de centrage 402, deux roues d'appui 403 et deux contre-roues 404.

Par ailleurs, on remarque que la base du rail profilé 410 est maintenue dans un support 411 qui comprend en façade une rainure 412 pour guider la roue de centrage 402 du module de grimpe 204 lors de sa sortie, afin de centrer et donc garantir la position du module de grimpe par rapport au rail profilé 410.

En outre, le rail profilé 410 est à sa base réduit à un profil en U formant dans cette portion un dégagement 414 pour laisser passer les deux contre-roues 404 du module de grimpe 204 derrière les ailes 413. Cette roue de centrage 402 garantit donc la position relative de la roue dentée 401, des deux roues d'appui 403 et des deux contre-roues 404 par rapport au rail profilé en « Ω » 410.

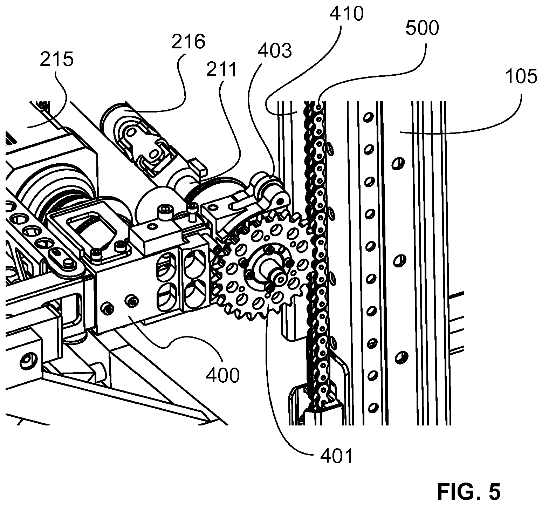

Sur la figure 5, qui est une vue en coupe du module de grimpe 204 rétractable en position écartée, la roue dentée 401 coopère avec les maillons d'une chaîne à rouleaux 500 ordinaire, maintenue tendue au fond du rail profilé en oméga 410. Pour cela, la première extrémité de la chaîne à rouleaux 500 est fixée par boulonnage à un point d'accroche (non représenté sur les figures) à la base du rail profilé 410 servant de point d'origine pour les escalades ou déplacement selon Y. La seconde extrémité de la chaîne est arrimée sensiblement au sommet du rail profilé 410 par un second boulon. La position de ce second boulon est réglable pour corriger la tension de la chaîne 500 dont la longueur augmente avec le temps d'utilisation.

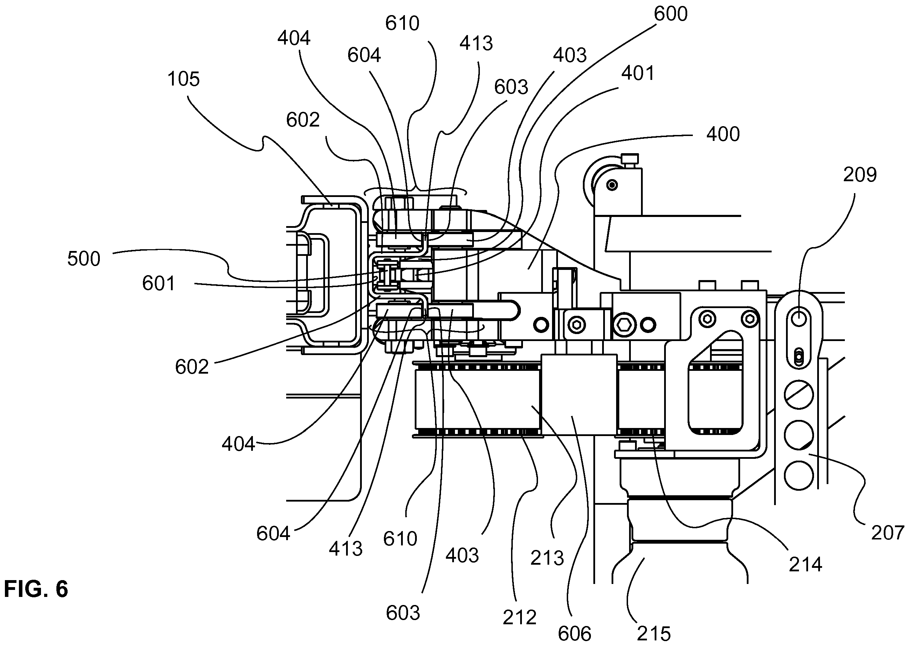

Comme on peut le voir plus en détail en vue de dessus sur la figure 6, le rail profilé 410 présente une gorge 600 délimitée par un fond 601 sensiblement perpendiculaire à deux flancs 602 de hauteur supérieure au diamètre d'une contre-roue 404 et parallèles entre eux.

De plus, chaque flanc 602 est prolongé par une aile 413 qui s'étend sensiblement perpendiculairement selon une orientation transversale depuis le flanc 602 vers l'extérieur du rail profilé 410. En outre chaque flanc 602 a une largeur supérieure à celle des roues d'appui 403 et des contres-roue 404 formant ainsi une face d'appui avant 603 respectivement une face d'appui arrière 604 pour ces roues 403, 404.

Sur la figure 6, le module de grimpe 204 est représenté dans une position écartée où la roue dentée 401 est engrenée sur la chaîne 500. Dans cette configuration de grimpe, chaque roue 403 est en appui sur la face avant 603 d'une première aile 413 alors que chaque contre-roue 404 est en appui sur la face arrière 604 d'une seconde aile 413 du rail profilé en « Ω » 410. On constate donc que les faces avant 603 et arrière 604 d'une aile 413 forment un chemin de roulement pincé par l'ensemble 610 formé de la roue d'appui 403 et des contre-roues 404. Ainsi, chaque ensemble 610 guide et maintient la position relative du module de grimpe 204 par rapport au rail profilé 410 et donc celle de l'axe de rotation de la roue dentée 401 par rapport à celle de la chaîne 500. Les pinces 610 compensent le faible arc d'enroulement de la chaîne 500 sur la roue dentée 401, bien inférieure à la limite habituelle de 90° minimum, en garantissant l'engrènement constant de la roue dentée 401 avec la chaîne 500.

Pour escalader les rayonnages 401, le robot 103, après s'être aligné sur les montants 105, déploie les quatre roues dentées 401, ce qui permet aux roues dentées 401 de s'engrener sur les chaînes 500 présentes dans les rails profilés 410 des quatre montants 105. La rotation des roues dentées 401 permet ensuite de déplacer verticalement le robot 103, qui peut grimper ou descendre le long des montants 105.

Pour entamer l'escalade, le module de contrôle de la position de l'arbre du moteur de commande de sortie des fourches 205 commande la sortie des modules de grimpe 204 afin que les roues d'appuie 403 exerce une pression sur la face avant 603 des ailes 413 des rails profilés 410 jusqu'à ce que les contre-roues 404 aient franchi la zone de dégagement 414 pour être au contact de la face arrière 604 au revers des ailes 413.

Ainsi, chaque roue dentée 401 reste engrenée avec la chaîne 500 grâce à la pression exercée par les roues d'appui 403 sur le rail profilé 410, ce qui empêche la chaîne de sauter.

Lorsque la zone de dégagement 414 est franchie, le module de contrôle de la position de l'arbre du moteur inverse le sens de rotation du moteur de commande des fourches 205 sur une fraction de tour inférieure au jeu fonctionnel de la transmission qu'il faut rattraper lors d'une inversion du sens de rotation du moteur pour entraîner la courroie dans le sens inverse. Le mouvement transversal des fourches 205 est alors libre dans l'intervalle du jeu fonctionnel. De cette manière, l'écartement entre deux modules de grimpe 204 dans le même plan transversal peut légèrement varier pour compenser les variations de distances entre deux montants 105 en vis-à-vis de part et d'autre de l'allée 104. Chaque ensemble 610 de chaque module de grimpe 204, garantit alors que chaque roue dentée 401 reste engrenée avec la chaîne 500 en vis-à-vis.

Lors de la descente, le module de contrôle de la position de l'arbre du moteur commande au moteur de commande des fourches 205 d'exercer une pression sur les rails profilés 410 à l'approche et dans la zone de dégagement 414.

Comme on peut le voir sur cette **figure 7** qui est une vue de détail du système d'entraînement 700 des deux modules de grimpe 204 de chaque fourche télescopique 205, le système d'entraînement 700 comprend en outre un dispositif d'embrayage 701 de la courroie 213 avec la poulie menante 214 et la poulie menée 212, à l'aide d'un galet tendeur 702. Ce galet tendeur 702 est monté mobile dans un support disposé au-dessus de la courroie crantée 213 pour appuyer sur la partie extérieure du brin supérieur 703 de celle-ci. Ce galet tendeur 702 est mobile entre trois positions :
- une position désengagée dans laquelle la poulie menante 214 et la poulie menée 212 sont désaccouplées, car le galet tendeur 702 n'est pas en contact, donc ne tend pas la courroie 213 ;
- une position engagée correspondante au fonctionnement nominal, dans laquelle le galet 702 tend la courroie 213 et assure la bonne transmission du couple du moteur 215 à l'arbre de transmission 211 ; et
- une position de sécurité en cas de rupture de la courroie crantée 213 qui provoque la chute automatique du galet tendeur 702 qui vient au contact de la poulie menée 212 et bloque celle-ci par frottement.

En fonctionnement normal, le galet 702 est en position engagée pour assurer la transmission du couple moteur aux roues dentées 401.

En cas de blocage du robot 103 au cours d'une escalade, notamment par la rupture d'une courroie 213, le personnel de maintenance peut alors débrayer le moteur en désengageant manuellement le galet tendeur 702 pour faire descendre le robot 103.

Sur la **figure 8** on a représenté en vue de détail un dispositif de compensation 800 de l'écart entre les deux rails profilés 410 d'une paire de montant 105 d'un rayonnage 100. Ce dispositif de compensation 800 est intercalé entre l'extrémité du bras coulissant 210 et l'embase 400 du module de grimpe 204. Chaque fourche télescopique 205 est équipée d'un unique dispositif de compensation 800 sur le bras coulissant 210 opposé au système d'entraînement (non représenté sur la figure 8). Le dispositif de compensation 800 comprend une coulisse 801 formée d'un palier lié au bras coulissant 210 et un coulisseau 802 formé d'un axe solidaire de l'embase 400, tous deux coulissants l'un par rapport à l'autre sur une longueur d'un centimètre selon l'orientation longitudinale du robot 103.

Grâce à ce débattement du dispositif de compensation, le robot 103 tolère une variation de +/- 5 mm entre les deux rails profilés 410 de chaque paire de montant 105.

### 6.2. Autres caractéristiques optionnelles et avantages de l'invention

Dans des variantes du mode de réalisation de l'invention détaillé ci-dessus, il peut également être prévu :
- d'équiper le chariot à guidage automatique de deux roues motrices centrées sur celui-ci, tandis que deux roues folles sont disposées en périphérie et assurent la stabilité du chariot. Cette géométrie des trains roulants est alors couplée avec un système de balancier qui permet de garantir l'isostatisme et de répartir le poids du robot et de sa charge, sur les quatre roues, indépendamment des imperfections du sol ;
- un dispositif de freinage du chariot lors des descentes ;
- une descente automatique du chariot en cas d'anomalie, par exemple en cas de perte de puissance électrique. Dans cette situation, les freins sont relâchés, et la vitesse de descente jusqu'au sol est limitée en exerçant un champ magnétique sur le ou les moteurs des moyens de grimpe, de sorte à créer un frein visqueux ;
- une localisation en altitude, par reconnaissance des étagères qui supportent des bacs, par reconnaissance des bacs par exemple à l'aide d'une puce RFID (de l'acronyme anglais Radio Frequency Identification) ;
- d'équiper le chariot à guidage automatique d'une fourche ou d'une pelle télescopique pour lever, translater et baisser un bac ou un objet ;
- d'équiper le chariot à guidage automatique de bras latéraux télescopiques, ou d'une fourche télescopique à l'extrémité de laquelle est monté un doigt, destinés à pousser ou à tirer des bacs, en les faisant glisser sur leur étagère ;
- d'équiper le chariot d'une balance de pesée des bacs permettant de procéder à un inventaire du contenu des bacs ;
- d'installer les montants à proximité immédiate des rayonnages, pour permettre au robot de monter et descendre le long des rayonnages, ces montants pouvant être fixés au sol ou à un rayonnage ;
- de prévoir un montant profilé présentant une aile latérale unique associé à un module de grimpe qui présente une seule roue d'appui et une seule contre roue aptes à coopérer avec l'unique aile latérale ;
- des montants profilés en forme de rail dont le fond et les flancs forment une empreinte en forme de queue d'aronde femelle ;
- d'équiper chaque module de grimpe de deux roues dentées parallèles et chaque montant d'une chaîne double ;
- de prévoir à une extrémité des montants des moyens de réglage de la tension de la chaîne à l'aide d'un ressort ;
- des montants qui présentent une gorge dans laquelle loger une chaîne et des ailes pour l'appui des roues des modules de grimpe, sur la face extérieure des montants par rapport au rayonnage ;
- de prévoir pour chaque module de grimpe au moins une roue de guidage longitudinale d'axe perpendiculaire à la roue dentée et apte à rouler sur un flanc du rail profilé de sorte à sensiblement garantir le centrage de la roue dentée par rapport à la chaîne du rail profilé ;
- une coulisse liée à l'embase et un coulisseau 802 solidaire du bras coulissant ;
- des moyens de solidarisation comprenant des patins destinés à glisser sur les montants.

Les exemples de système de préparation de commandes décrit ci-dessus peuvent être utilisés dans différents types d'environnements industriels, et par exemple dans un centre logistique de préparation de commandes ou au sein d'une chaîne logistique d'approvisionnement en pièces détachées ou en composants d'une chaîne de production.

## Revendications

1. Système de préparation de commandes comprenant :
- deux paires de montants (105) solidarisés chacun à deux rayonnages (100) distincts délimitant une allée de circulation (104);
- un chariot à guidage automatique (103) présentant au moins deux roues de roulage (202), destiné à prélever des objets d'une commande dans au moins un desdits rayonnages (100), et des moyens de grimpe motorisés aptes à coopérer avec lesdits montants (105) de sorte à permettre audit chariot (103) de s'élever le long desdits montants,
lesdits moyens de grimpe comprenant quatre roues dentées (401) d'axes sensiblement parallèles, destinées chacune à coopérer avec un desdits quatre montants (105), les axes des roues dentées (401) étant sensiblement orthogonaux aux axes des roues de roulage (202),
chacune des roues dentées (401) étant montée sur un support mobile (400) par rapport au châssis (200) dudit chariot entre deux positions :
- une position écartée dans laquelle au moins une partie de ladite roue dentée (401) montée sur ledit support fait saillie latéralement hors de l'alignement dudit châssis (200) ;
- une position rétractée, dans laquelle la roue dentée (401) montée sur ledit support est en vis-à-vis dudit châssis (200) ;
**caractérisé en ce qu'**une chaîne à rouleaux (500) est fixée sur chacun desdits montants (105), sensiblement tendue, ladite chaîne (500) s'étendant sensiblement parallèlement à l'axe longitudinal du montant (105) sur lequel elle est fixée et étant destinée à recevoir au moins une dent de la roue dentée (401) coopérant avec le montant sur lequel elle est fixée, deux rouleaux adjacents de ladite chaîne (500) étant sensiblement espacés de la valeur du pas de ladite roue dentée (401),
et **en ce que** chaque support mobile (400) présente des moyens de solidarisation avec un desdits quatre montants (105) configurés de sorte à permettre de maintenir un écartement prédéterminé entre l'axe de la roue dentée (401) montée sur ledit support mobile et la chaîne (500) recevant les dents de cette roue dentée (401).

2. Système de préparation de commandes selon la revendication 1, **caractérisé en ce que** chacune desdites chaînes (500) est fixée sensiblement aux deux extrémités d'un desdits montants (105).

3. Système de préparation de commandes selon la revendication 2, **caractérisé en ce qu'**il comprend des moyens de réglage de la position d'au moins un des moyens de fixation d'au moins une desdites chaînes (500) sensiblement à une extrémité d'un desdits montants (105), selon l'axe longitudinal dudit montant (105), destinés à permettre de tendre ladite chaîne (500).

4. Système de préparation de commandes selon la revendication 3, **caractérisé en ce que** lesdits moyens de réglage comprennent un ressort.

5. Système de préparation de commandes selon l'une quelconque des revendications 1 à 4, **caractérisé en ce que** lesdits moyens de solidarisation de chaque support mobile (400) avec un desdits quatre montants (105) comprennent au moins une roue d'appui (403) et une contre-roue (404) d'axes parallèles à l'axe de la roue dentée (401) montée sur le support mobile, aptes à rouler sur un desdits montants (105).

6. Système de préparation de commandes selon l'une quelconque des revendications 1 à 5, **caractérisé en ce que** lesdits supports mobiles (400) sont montés sensiblement aux quatre extrémités du châssis (200) dudit chariot.

7. Système de préparation de commandes selon l'une quelconque des revendications 1 à 6, **caractérisé en ce que** ledit montant (105) comprend une gorge (600) longitudinale apte à recevoir ladite chaîne (500).

8. Système de préparation de commandes selon l'une quelconque des revendications 5 à 7, **caractérisé en ce que** ledit montant(105) comprend au moins une aile (413) s'étendant sensiblement perpendiculairement à l'axe longitudinal dudit montant (105), ladite roue d'appui (403) venant en appui sur une face (603) de la dite aile (413) et ladite contre-roue (404) venant en appui sur une face opposée (604) de ladite aile (413).

9. Système de préparation de commandes selon l'une quelconque des revendications 1 à 8, **caractérisé en ce que** ledit montant (105) est un rail (410) profilé en oméga.

10. Système de préparation de commandes selon l'une quelconque des revendications 1 à 9, **caractérisé en ce que** ledit chariot (103) présente des moyens de préhension d'un bac (102) de stockage d'objets.

11. Système de préparation de commandes selon l'une quelconque des revendications 1 à 10, **caractérisé en ce qu'**il comprend des moyens de freinage desdits moyens de grimpe.

12. Système de préparation de commandes selon l'une quelconque des revendications 1 à 10, **caractérisé en ce qu'**il comprend deux moteurs indépendants (215) destinés chacun à entraîner une des paires de roues dentées (401).

## Patentansprüche

1. Kommissionierungssystem, umfassend:
- zwei Paar Pfosten (105), die jeweils mit zwei unterschiedlichen Regalen (100) verbunden sind, die einen Verkehrsweg (104) begrenzen;
- einen Wagen mit automatischer Führung (103), der mindestens zwei Laufräder (202) aufweist, der bestimmt ist, Objekte einer Bestellung aus mindestens einem der Regale (100) zu entnehmen, und motorisierte Klettermittel, die imstande sind, mit den Pfosten (105) derart zusammenzuwirken, dass es dem Wagen (103) gestattet ist, sich entlang der Pfosten nach oben zu bewegen,
wobei die Klettermittel vier gezahnte Räder (401) mit etwa parallelen Achsen umfassen, die jeweils bestimmt sind, mit einem der vier Pfosten (105) zusammenzuwirken, wobei die Achsen der gezahnten Räder (401) etwa orthogonal den Achsen der Laufräder (202) sind,
wobei jedes der gezahnten Räder (401) auf einem in Bezug auf das Fahrgestell (200) des Wagens zwischen zwei Positionen beweglichen Träger (400) angebracht ist:
- einer entfernten Position, in der mindestens ein Teil des gezahnten Rades (401), das auf dem Träger angebracht ist, seitlich aus der Flucht des Fahrgestells (200) hervorsteht;
- einer eingezogenen Position, in der das gezahnte Rad (401), das auf dem Träger angebracht ist, gegenüber dem Fahrgestell (200) ist;
**dadurch gekennzeichnet, dass** eine Rollenkette (500) auf jedem der Pfosten (105) etwa gespannt befestigt ist, wobei sich die Kette (500) etwa parallel zur Längsachse des Pfostens (105) erstreckt, auf dem sie befestigt ist und bestimmt ist, mindestens einen Zahn des gezahnten Rades (401) aufzunehmen, das mit dem Pfosten zusammenwirkt, auf dem es befestigt ist, wobei zwei zu der Kette (500) benachbarte Rollen etwa um den Wert der Teilung des gezahnten Rades (401) beabstandet sind,
und dass jeder bewegliche Träger (400) Verbindungsmittel mit einem der vier Pfosten (105) aufweist, die derart ausgelegt sind, dass die Aufrechterhaltung einer vorher festgelegen Entfernung zwischen der Achse des gezahnten Rades (401), das auf dem beweglichen Träger angebracht ist, und der Kette (500), die die Zähne dieses gezahnten Rades (401) aufnimmt, gestattet ist.

2. Kommissionierungssystem nach Anspruch 1, **dadurch gekennzeichnet, dass** jede der Ketten (500) etwa an den zwei Enden von einem der Pfosten (105) befestigt ist.

3. Kommissionierungssystem nach Anspruch 2, **dadurch gekennzeichnet, dass** es Einstellmittel der Position von mindestens einem der Befestigungsmittel mindestens einer der Ketten (500) etwa an einem Ende von einem der Pfosten (105) gemäß der Längsachse des Pfostens (105) umfasst, die bestimmt sind, die Kette (500) zu spannen.

4. Kommissionierungssystem nach Anspruch 3, **dadurch gekennzeichnet, dass** die Einstellmittel eine Feder umfassen.

5. Kommissionierungssystem nach einem der Ansprüche 1 bis 4, **dadurch gekennzeichnet, dass** die Verbindungsmittel jedes beweglichen Trägers (400) mit einem der vier Pfosten (105) mindestens ein Stützrad (403) und ein Gegenrad (404) mit zur Achse des gezahnten Rades (401), das auf dem beweglichen Träger angebracht ist, parallelen Achsen umfassen, die imstande sind, auf einem der Pfosten (105) zu fahren.

6. Kommissionierungssystem nach einem der Ansprüche 1 bis 5, **dadurch gekennzeichnet, dass** die beweglichen Träger (400) etwa an den vier Enden des Fahrgestells (200) des Wagens angebracht sind.

7. Kommissionierungssystem nach einem der Ansprüche 1 bis 6, **dadurch gekennzeichnet, dass** der Pfosten (105) eine Längsnut (600) umfasst, die imstande ist, die Kette (500) aufzunehmen.

8. Kommissionierungssystem nach einem der Ansprüche 5 bis 7, **dadurch gekennzeichnet, dass** der Pfosten (105) mindestens einen Flügel (413) umfasst, der sich etwa senkrecht zur Längsachse des Pfostens (105) erstreckt, wobei sich das Stützrad (403) auf einer Fläche (603) des Flügels (413) abstützt und sich das Gegenrad (404) auf einer gegenüberliegenden Fläche (604) des Flügels (413) abstützt.

9. Kommissionierungssystem nach einem der Ansprüche 1 bis 8, **dadurch gekennzeichnet, dass** der Pfosten (105) eine Schiene (410) mit Omegaprofil ist.

10. Kommissionierungssystem nach einem der Ansprüche 1 bis 9, **dadurch gekennzeichnet, dass** der Wagen (103) Greifmittel eines Objektlagerbehälters (102) aufweist.

11. Kommissionierungssystem nach einem der Ansprüche 1 bis 10, **dadurch gekennzeichnet, dass** es Bremsmittel der Klettermittel umfasst.

12. Kommissionierungssystem nach einem der Ansprüche 1 bis 10, **dadurch gekennzeichnet, dass** es zwei unabhängige Motoren (215) umfasst, die jeweils bestimmt sind, eins von den Paaren gezahnter Räder (401) anzutreiben.

## Claims

1. An order picking system comprising:
- two pairs of uprights (105) each attached to two separate shelvings (100) delineating a centre aisle (104) ;
- an automatic guided vehicle (103) having at least two running wheels (202) for picking up objects for an order in at least one of said shelvings (100), and motorised climbing means adapted to cooperate with said uprights (105) so as to allow said vehicle (103) to rise along said uprights,
said climbing means comprising four gear wheels (401) of substantially parallel axes, each intended to cooperate with one of the four uprights (105), the axes of the gear wheels (401) being substantially orthogonal to the axes of the running wheels (202), each of the gear wheels (401) being mounted on a support (400) that can be moved relative to the chassis (200) of said vehicle between two positions:
- a spaced-apart position in which at least a portion of said gear wheel (401) mounted on said support protudes laterally out of alignment with said chassis (200);
- a retracted position, in which the gear wheel (401) mounted on said support is facing said chassis (200);
**characterised in that** a substantially stretched roller chain (500) is fixed on each of said uprights (105), said chain extending substantially parallel to the longitudinal axis of the upright (105) to which it is fixed and intended to receive at least one tooth of the gear wheel (401) cooperating with the upright to which it is fixed, two adjacent rollers of said chain (500) being substantially spaced apart by the pitch value of said gear wheel (401),
and **in that** each movable support (400) has securing means with one of said four uprights (105) configured so as to maintain a predetermined distance between the axis of the gear wheel (401) mounted on said movable support and the chain (500) receiving the teeth of said gear wheel (401).

2. The order picking system according to claim 1, **characterised in that** each of said chains (500) is attached substantially to both ends of one of said uprights (105).

3. The order picking system according to claim 2, **characterised in that** it comprises means for adjusting the position of at least one of means for fixing at least one of said chains (500) substantially at one end of one of said uprights (105), along the longitudinal axis of said upright (105), intended to allow said chain (500) to be stretched.

4. The order picking system according to claim 3, **characterised in that** said adjusting means comprises a spring.

5. The order picking system according to any of the claims 1 to 4, **characterised in that** said means for securing each movable support (400) to one of said four uprights (105) comprise at least one support wheel (403) and a counter-wheel (404) of axes parallel to the axis of the gear wheel (401) mounted on the movable support, suitable for rolling on one of said uprights (105).

6. The order picking system according to any of claims 1 to 5, **characterised in that** said movable supports (400) are mounted substantially at all four ends of the chassis (200) of said vehicle.

7. The order picking system according to any of claims 1 to 6, **characterised in that** said upright (105) comprises a longitudinal groove (600) adapted to receive said chain (500).

8. The order picking system according to any of claims 5 to 7, **characterised in that** said upright (105) comprises at least one aisle (413) extending substantially perpendicular to the longitudinal axis of said upright (105), said support wheel (403) bearing upon one side of said aisle (413) and said counter-wheel (404) bearing upon an opposite side (604) of said aisle (413).

9. The order picking system according to any of claims 1 to 8, **characterised in that** said upright (105) is an omega profiled rail (410).

10. The order picking system according to any of claims 1 to 9, **characterised in that** said vehicle (103) has means for gripping an object storage bin (102).

11. The order picking system according to any of claims 1 to 10, **characterised in that** it comprises braking means for said climbing means.

12. The order picking system according to any of claims 1 to 10, **characterised in that** it comprises two independent motors (215) each intended to drive one of the pairs of gear wheels (401).
